# EUROPEAN PATENT SPECIFICATION

(11) **EP 0 563 669 B1**
(45) Date of publication and mention of the grant of the patent: **27.01.1999**
(21) Application number: 93104226.1
(22) Date of filing: 16.03.1993
(51) Int. Cl.: C02F 1/00, A62D 3/00

(54) **A method of treatment of a fluid containing volatile organic halogenated compounds**
Verfahren zur Behandlung einer Flüssigkeit, die flüchtige, halogenierte organische Verbindungen enthält
Méthode de traitement d'un fluide contenant des composés organiques halogenés volatiles

(30) Priority: 25.03.1992 JP 98727/92; 23.04.1992 JP 129975/92
(43) Date of publication of application: 06.10.1993
(60) Divisional application: 96109638.5
(73) Proprietor: KURITA WATER INDUSTRIES LTD., Shinjuku-ku Tokyo (JP)
(72) Inventor: Miyabe, Kanji, c/o Kurita Water Industries Ltd., Tokyo (JP); Orita, Nobuhiro, c/o Kurita Water Industries Ltd., Tokyo (JP); Iwasaki, Makoto, c/o Kurita Water Industries Ltd., Tokyo (JP); Tsurumaru, Yohka, c/o Kurita Water Industries Ltd., Tokyo (JP); Nakahara, Toshitsugu, c/o Kurita Water Ind. Ltd., Tokyo (JP)
(74) Representative: Türk, Gille, Hrabal

(56) References cited:
- EP-A- 0 178 001
- EP-A- 0 412 456
- FR-A- 2 285 355
- GB-A- 1 400 529
- US-A- 4 400 566
- US-A- 4 618 686
- US-A- 4 909 947

## Description

### BACKGROUND OF THE INVENTION

### 1. Field of the invention

The present invention relates to novel methods for decomposing volatile organic halogenated compounds. More particularly, it relates to a practically advantageous method of treating a gas, containing volatile organic halogenated compounds which has been brought in contact with an adsorbent with a reducing agent in the presence of a specific catalyst and decomposing the volatile organic halogenated compounds contained in the fluid efficiently by reduction to make the fluid harmless.

### 2. Description of the prior art

Volatile organic halogenated compounds must be removed from a ground water, a waste water and soil because they cause environmental pollution. Various methods have been examined for the treatment of service water and a waste water containing volatile organic halogenated compounds. Examples of such methods are: (1) aeration treatment, (2) adsorption treatment, (3) decomposition treatment by oxidation, (4) biological treatment and (5) thermal decomposition. However, these methods have various problems and are not satisfactory.

For example, the method (1) simply transfers the organic halogenated compounds from an underground water or soil to the atmosphere and does not bring a fundamental solution to the environmental problem. The method (2) can catch or recover the organic halogenated compounds and is applied in combination with the method (1) in many cases. This method has a problem that the adsorption capacity of the adsorbent, such as an activated charcoal, is inevitably decreased by the influence of moisture. The method of adsorption has another problem that the adsorbent must be regenerated. When it is regenerated by using steam, a waste water containing a high concentration of the organic halogenated compounds is discharged.

For the fundamental solution of the environmental pollution, a degradation method of the organic halogenated compounds, such as the methods (3) to (5), is required. The method of decomposition by oxidation (3) has been actively examined for the decomposition of the halogen compounds. Many reports can be found on the methods utilizing ultraviolet light, ozone, hydrogen peroxide and the like. Though reports are also found on the decomposition by the methods (4) and (5), the number of them is not so many.

In the methods of decomposition by oxidation and thermal decomposition described above, a large amount of energy is required for generation of ultraviolet light and ozone or for heating. Thus, the methods have problems that they inevitably lead to a higher cost of treatment and that organic halogenated compounds may be newly generated because the halogen formed by the decomposition reaction easily reacts with organic compounds present in the neighborhood. The method of biological decomposition (4) requires less amount of energy for the treatment but microbiologies which can efficiently decompose the organic halogenated compounds have not been discovered. Thus, the method of biological decomposition is not practical either. A method of decomposition by reduction utilizing iron powder as a reducing agent was reported but this method is not yet practical either.

GB-A-1400529 discloses a method of decomposing volatile organic halogenated compounds comprising drying the volatile organic halogenated compounds and then bringing the gas in contact with a reducing agent in the presence of a metal catalyst, e.g. rhodium in combination with P+ or Pd.

### SUMMARY OF THE INVENTION

The present invention accordingly has an object to overcome the problems of the conventional methods of treatment of the fluid containing volatile organic halogenated compounds and to provide a practical method of treatment of the fluid containing volatile organic halogenated compounds which efficiently decomposes the volatile organic halogenated compounds contained in the fluid, such as water and gas, with a small amount of energy and makes the fluid harmless.

Extensive investigations undertaken by the present inventors with the objects described above lead to a discovery that, when the fluid containing volatile organic halogenated compounds are brought into contact with a reducing agent in the presence of a specific metal catalyst, the volatile organic compounds in the fluid are efficiently decomposed to harmless hydrocarbons, carbon dioxide and hydrogen halides. Hydrogen halides generated do not easily react again with organic compounds present in the neighborhood. It was also discovered that products of the decomposition as well as the volatile organic halogenated compounds themselves can be effectively made harmless by treating the decomposed fluid with an additional treatment, selected from an adsorption treatment, the thermal decomposition treatment and the biological decomposition treatment. The present invention has been completed on the basis of the discovery.

In accordance with the present invention there is provided a process for decomposing volatile organic halogenated compounds which comprises
- bringing a gas, containing
   - volatile organic halogenated compounds into contact with an adsorbent,
- to separate the volatile organic halogenated compounds therefrom
- regenerating the adsorbent with nitrogen gas
- to obtain a regeneration gas, containing
   - volatile organic halogenated compounds, and
   - water
- decreasing the relative humidity of the regeneration gas containing
   - the volatile organic halogenated compounds, and
   - water, and
- then bringing the regeneration gas in contact with a reducing agent
- in the presence of a
   - palladium catalyst, or a
   - platinum catalyst, and a
   process for decomposing volatile organic halogenated compounds which comprises
- bringing a gas, containing
   - volatile organic halogenated compounds into contact with an adsorbent,
- to separate the volatile organic halogenated compounds therefrom
- regenerating the adsorbent with steam
- condensing the resulting steam
- to obtain a condensed water, containing
   - volatile organic halogenated compounds,
- aerating the condensed water with air
- to obtain a regeneration gas, containing
   - volatile organic halogenated compounds, and
   - water
- decreasing the relative humidity of the regeneration gas, and
- then bringing the regeneration gas in contact with a reducing agent
- in the presence of a
   - palladium catalyst, or a
   - platinum catalyst .

In a preferred embodiment the volatile organic halogenated compounds are obtained from service water, underground water or soil.

In another preferred embodiment the relative humidity of the regeneration gas containing the volatile organic halogenated compounds is decreased by one or more treatments selected from the group consisting of heating the regeneration gas, mixing the regeneration gas with dry air, and dehumidifying the regeneration gas, with an ion exchange resin.

In a further embodiment the catalyst comprises palladium metal or platinum metal, respectively, deposited on a carrier, and the amount of palladium or platinum is 0.1 to 10 weight % based on the carrier.

In a further preferred embodiment the amount of the reducing agent is 100 to 100,000 volume parts per 1 volume part of the volatile organic halogenated compounds.

In a further preferred embodiment the palladium catalyst or the platinum catalyst is positioned in a column as layers of a multiple stage and the regeneration gas containing the volatile organic halogenated compounds and water is passed through the stages of the catalyst successively while the reducing agent is added to the regeneration gas before each stage.

In a further preferred embodiment the processes comprises subjecting the regeneration gas which contained the volatile organic halogenated compounds and water, after contact with the reducing agent in the presence of the palladium catalyst or the platinum catalyst to at least one further treatment selected from the group consisting of an adsorption treatment, a thermal decomposition treatment and a biological decomposition treatment.

In another preferred embodiment the palladium or the platinum of the catalyst is supported on a carrier treated with a hydrophobic compound.

### BRIEF DESCRIPTION OF THE DRAWINGS

The invention will be described with reference to the accompanying drawings, wherein:
Figure 1 is a chart showing the outline of an example of the apparatus for conducting a method of the invention
   The step of decreasing the relative humidity of the regeneration gas is not shown.
Figure 2 is a chart showing the outline of an example of the apparatus for conducting a method in accordance with claims 6 or 14.

The numbers and characters in the figures have the meanings as listed in the following:
1: a column of catalyst
3: an air-stripping tower
4: a column of adsorbent
10: a tank for mixing gases

### DETAILED DESCRIPTION OF THE INVENTION

The invention is described in detail in the following.

The volatile organic halogenated compound to which the present invention is applied has a boiling point generally of 150°C or lower and preferably of 80°C or lower. Examples of the volatile organic halogenated compound are trichloroethylene, tetrachloroethylene, trans-1,2-dichloroethylene, cis-1,2-dichloroethylene, carbon tetrachloride, chloroethane, methylene chloride, chloroform, vinyl chloride, 1,1-dichloroethane, 1,2-dichloroethane, 1,2-dichloropropane, dichlorobromoethylene, 1,1,1-trichloroethane, bromodichloromethane, chlorodibromomethane, bromoform, various kinds of chlorofluorohydrocarbons or chlorofluorocarbons (referred as "flons" hereinafter) and the like.

A fluid containing volatile organic halogenated compounds treated is a water or a gas containing one or more kinds of the volatile organic halogenated compound described above. Examples of the water containing volatile organic halogenated compounds are a water containing the volatile organic halogenated compounds discharged from various kinds of manufacturing processes, a service water, a drained water and an underground water containing the volatile organic halogenated compounds, fluids obtained by extracting the volatile organic halogenated compounds contained in soil with water and the like, a water discharged from regeneration of an adsorbent with steam after the adsorbent is brought into contact with the volatile organic halogenated compounds and the like fluids.

Examples of the gas containing volatile organic halogenated compounds are gas containing the volatile organic halogenated compounds discharged from various kinds of manufacturing processes, a gas obtained by aeration treatment and the like treatment of a waste water or a soil containing the volatile organic halogenated compounds with the air, nitrogen gas or the like. The volatile organic halogenated compounds in an liquid material, such as a waste water, can be recovered easily by aeration with a gas, such as nitrogen gas and the air. In this method, an air-stripping tower is advantageously utilized. The water containing volatile organic halogenated compounds is charged at the top of the air-stripping tower and the air or a nitrogen gas is blown into the bottom of the tower. The fluid containing volatile organic halogenated compounds and the air, the nitrogen gas or the like are brought into the counter current contact with each other and the volatile organic halogenated compounds are transferred to the gas phase according to the Henry's law in the stripping tower. The air-stripping tower is generally filled with packings, such as Raschig rings.

The volatile organic halogenated compounds contained in soil can be recovered by blowing the air into the soil through a number of pipes inserted into the soil with a blower to trap the compounds into a tank. When the volatile organic halogenated compounds are contained in a solid material, such as soil, the compounds can be extracted with a fluid, such as water, and the compounds transferred to the fluid can be recovered by the aeration.

The catalyst used in the invention is a metal catalyst supported on a carrier. Examples of the metal catalyst are palladium, platinum, ruthenium, rhodium, copper, iron, iridium, nickel and the like. Preferable examples among them are catalysts of noble metals, such as palladium, platinum, ruthenium, rhodium and the like. More preferable examples are catalysts of palladium and platinum. As the metal catalyst, an elementary metal or oxides or hydroxides of the metal can be utilized.

Examples of the carrier are alumina, titania, activated charcoal, zirconia, zeolite, glass, silica, silica-alumina, ion exchange resins, plastic pellets and the like. Preferable examples among them are alumina, titania, silica and ion exchange resins. As the ion exchange resin, weak basic anion exchange resins based on copolymers of styrene and divinyl benzene are preferred. The amount of the metal supported on the carrier is generally 0.1 to 10 weight % based on the amount of the carrier.

The shape of the carrier is not particularly limited but any kinds of shape, such as powder, granule and pellet, can be utilized. When the carrier has a shape of granule or pellet, it can be packed into a column and the fluid for treatment can be passed through the column continuously. When the carrier has a shape of powder, it can be packed into a column and the operation can be conducted in the condition of fluidized bed.

As the reducing agent utilized in the invention, a reducing gas, such as hydrogen gas, or a reducing agent which generates hydrogen by the contact with the catalyst described above, such as hydrazine, hydroxylamine and sodium hydride, can be preferably utilized in the decomposition treatment by reduction in the liquid phase. In the decomposition treatment by reduction in the gas phase, a reducing gas, such as hydrogen gas, can be preferably utilized. The hydrogen gas can be supplied by electrolysis, from a bomb, by utilizing a hydrogen absorbing metal and from the like sources. The amount of the reducing agent for use is preferably 1 to 80 times the equivalent of the agent required for substitution of the halogen contained in the volatile organic halogenated compounds in the decomposition by reduction in the liquid phase and 100 to 100,000 volume parts per 1 volume part of the halogenated compounds in the decomposition by reduction in the gas phase. When the decomposition treatment is conducted in the gas phase and hydrogen is utilized as the reducing agent, the concentration of hydrogen gas in the air is not allowed to exceed 4 %. The temperature of the decomposition treatment by reduction is in the range from 60 to 120°C in the decomposition in the gas phase and in the range from 10 to 60°C in the decomposition in the liquid phase. A higher temperature in these ranges is desirable.

The gas for treatment containing the volatile organic halogenated compounds, generally contains moisture. Moisture adversely affects the decomposition treatment by reduction in a gas phase. Particularly when the gas is generated by an aeration before the decomposition by reduction, relative humidity of the gas is near 100 % and an effective method of decreasing the humidity (water) is important for achieving the stable decomposition treatment by reduction in the gas phase for a long period under a high speed such as SV of 5000 hr⁻¹ or more. Thus, in accordance with the present invention a process of decreasing the relative humidity of the gas for treatment is added before the decomposition treatment by reduction in the gas phase.

The method of decreasing the relative humidity is not particularly limited. Examples of such method are: (1) the method of heating of the gas for treatment or the catalyst layer; (2) the method of mixing dry air with the gas for treatment; (3) the method of removing the moisture with an ion exchange resin; and the like methods.

In the method (1), the heating can be made by using a heater, a heat pump, a Root's blower and the like. In the method (2), the dry air can be obtained by using the method of dehumidifying by PSA (pressure swing adsorption) or by using a heat pump. In the method (3), sodium type strong cation exchange resin and the like can be used as a dehumidifying material. Other methods, such as the method of utilizing a membrane, the method of utilizing an industrial adsorbents and the like, may be adopted as well.

The relative humidity to be achieved is varied depending on the chemical properties and the structure of the surface of the catalyst carrier and can be selected suitably according to them. For example, when platinum/γ-alumina is utilized as a catalyst, the ability of decomposition by reduction is remarkably enhanced by making the relative humidity generally to 60 % or less, preferably to 40 % or less and more preferably to 20 % or less.

Another method for eliminating the adverse effect of moisture is to utilize a metal catalyst treated with the hydrophobic treatment. The hydrophobic catalyst can be prepared by coating the carrier with polytetrafluoroethylene and the like and then by loading the metal on it.

When the gas for treatment contains a high concentration of the volatile organic halogenated compounds, treatment of the gas makes problems that, the amount of the reducing gas, such as a hydrogen gas, used for the treatment must be increased to cause increased danger of explosion. Therefore, in accordance with the present invention the high concentration of the volatile organic halogenated compound in the gas is decreased by bringing the gas into contact with an adsorbent before the decomposition treatment and then the gas containing the residual volatile organic halogenated compounds is treated with the decomposition by reduction. The high concentration of the volatile organic halogenated compounds in the gas generally means a concentration of 100 volume ppm or more.

When a fluid for treatment is a water containing a high concentration of the volatile organic halogenated compounds, the water may be treated with aeration in advance to get the stripped gas and then the gas is brought into contact with an adsorbent.

Examples of the adsorbent are activated charcoal, silica, zeolite and the like. Activated charcoal is preferable among them. The shape of the adsorbent is not particularly limited but various kinds of shape, such as powder, granule, fiber, non-woven fabric and woven fabric, may be adopted. The adsorbent is generally utilized by packing in a column. The form of the packed column is not particularly limited but various forms, such as the fixed bed form, the fluidized bed form and the honey comb rotary form, may be utilized. The amount of the adsorbent is not particularly limited but generally in the range from 10 to 1,000 g per 1 g of the volatile organic halogenated compounds.

It is preferred that the concentration of the volatile organic halogenated compounds in the gas after the treatment with the adsorbent described above is generally several tens volume ppm or less. When the concentration is in this range, the treatment of catalytic reduction in the next process can be facilitated. The speed of charging the gas to the adsorbent is in the range from several hundreds to 10,000 hr⁻¹.

After the adsorption of the volatile organic halogenated compounds, the adsorbent can be regenerated with a heated gas, such as steam and nitrogen. The volatile organic halogenated compounds are contained in the water and in the gas discharged from the regeneration in very high concentrations and the volatile organic compounds are preferably recovered as much as possible. The compounds still remaining after the recovering treatment is treated with the decomposition by the catalytic reduction.

By the same method as above the gas containing volatile organic halogenated compounds is brought into contact with the adsorbent to remove the volatile organic halogenated compounds. Then, the adsorbent is regenerated with a nitrogen gas. The volatile organic halogenated compounds discharged by the regeneration are decomposed by reduction by bringing the gas into contact with a reducing agent in the presence of a metal catalyst.

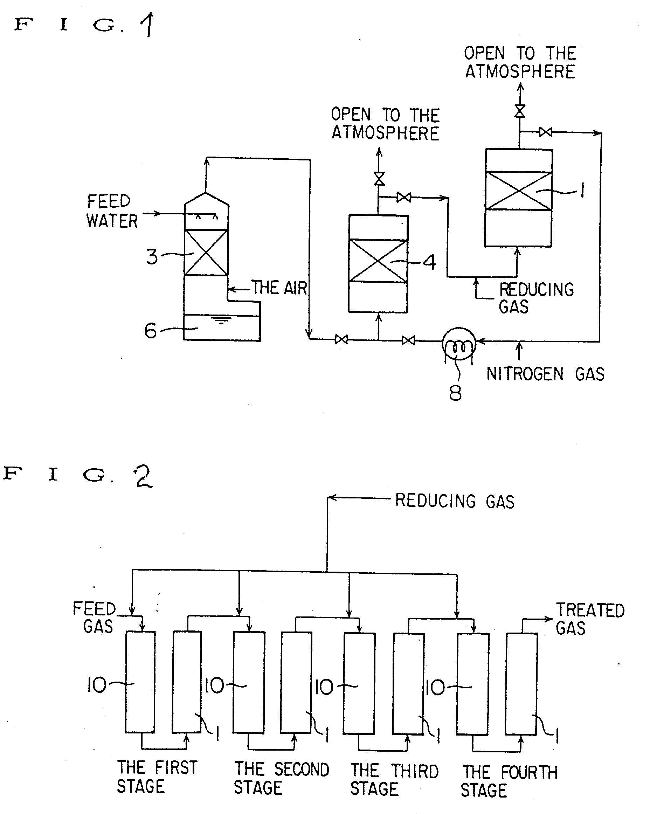

Figure 1 is a chart showing the outline of the apparatus for conducting the method described above. Water for treatment (feed water) containing the volatile organic compounds is charged at the top of the air-stripping tower 3 and, at the same time, the air is blown into the bottom of the tower 3. In the air-stripping tower, the volatile organic halogenated compounds are transferred to the air and removed. The treated water is stored in a tank 6. The gas containing the volatile organic halogenated compounds is sent to the adsorbent column 4 and the volatile organic halogenated compounds contained in the gas are removed by adsorption. The air discharged from the column 4 is discharged into the atmosphere.

When the amount of the compounds adsorbed to the adsorbent 4 has reached to the saturation, a nitrogen gas heated to 100 to 200°C by a heater or a heat exchanger 8 is introduced in order to regenerate the adsorbent. The volatile organic halogenated compounds adsorbed in the adsorbent are transferred to the nitrogen gas by this operation. The nitrogen gas containing the volatile organic halogenated compounds is then introduced to the catalyst column 1 together with the reducing gas, such as a hydrogen gas, and the volatile organic halogenated compounds are decomposed by reduction. The nitrogen gas discharged from the decomposition process may be utilized for the regeneration of the adsorbent. The decrease of the relative humidity of the regeneration gas is not shown.

By the same method as above the fluid containing volatile organic halogenated compounds is brought into contact with the adsorbent to remove the volatile organic halogenated compounds. Then, the adsorbent is regenerated with steam. The volatile organic halogenated compounds contained in the gas by the aeration of the discharged condensed water are decomposed by reduction by bringing the gas from the aeration of the discharged condensed water into contact with the reducing agent in the presence of the metal catalyst.

The fluid containing volatile organic halogenated compounds generally contains oxygen too. Competitive reactions of the volatile organic halogenated compounds and oxygen with hydrogen take place in the reduction degradation treatment. As the reducing agent is consumed by the reaction with oxygen to a larger extent, the ability of reduction is decreased further and naturally a large amount of the reducing agent is required. Because of this reason, it is necessary to reduce the influence of oxygen present in the reaction system on the performance of this reduction treatment.

The method of multi-stage reduction is effective for overcoming this problem. For example, when hydrogen gas is utilized as the reducing gas, the relation between removal of the volatile organic halogenated compounds and the amount of the added hydrogen in the gas phase is as following. The removal increases extremely with the increase of the amount of the added hydrogen when the amount of the added hydrogen is rather small. However, the increasing removal is less as compared with the increase of the amount of the added hydrogen when the amount of the added hydrogen is large. In this case, the efficiency is low. Similar relation can be observed irrespective of the concentration of the volatile organic halogenated compounds. Because of this relation, the method of multi-stage reduction is more efficient than the method of single stage reduction. When the same amount of the reducing agent, such as a hydrogen gas, is used, the method of multi-stage reduction provides more effective treatment. When the same performance is to be achieved by the two methods, the amount of the reducing agent utilized in the treatment can be decreased by adopting the method of multi-stage reduction.

Thus, it is preferred that a metal catalyst is placed as layers of multiple stages and the fluid containing the volatile organic halogenated compounds is passed through the stages of the catalyst successively while the reducing agent is added before the each catalytic layer.

Figure 2 is a chart showing the outline of an example of the apparatus for conducting the method described above. In each of the stages placed in series, a gas mixing tank 10 is placed before the catalyst column 1. In the figure, the apparatus having four stages is shown. However, the number of the stage is not particularly limited if it is two or more. The gas mixing tank 10 is not necessary when the gas for treatment and the reducing gas, such as a hydrogen gas, is sufficiently mixed by a suitable method, such as the line injection.

Gas for treatment (feed gas) is charged to the tank 10 of the first stage and then passes through the catalyst column 1 of the first stage, the tank 10 and the catalyst column 1 of the second stage, the tank 10 and the catalyst column 1 of the third stage and the tank for mixing gases 10 and the catalyst column 1 of the fourth stage, successively. The reducing gas, such as hydrogen gas, is fed to each of the mixing tanks of the four stages. The volatile organic halogenated compounds are decomposed by reduction in each of the catalyst columns 1 of the four stages.

In the example described above, the treatment of decomposition by reduction in the gas phase is explained. The method can be applied to the treatment in the liquid phase in the same way.

The fluid treated as described above contains unreacted compounds and reaction products, such as hydrogen halides and hydrocarbons, and it is preferably treated with at least one post-treatment selected from the group consisting of an adsorption treatment, a thermal decomposition and a biological decomposition treatment. The adsorbent utilized for the adsorption treatment is activated charcoal, natural or synthetic zeolite, silica gel, activated alumina, silica-alumina or the like. The form of the packed column for the adsorbent is not particularly limited but any of the fixed bed form, the fluidized bed form, the honey comb rotatory form and the like may be adopted.

For the regeneration of the adsorbent which has adsorbed the unreacted compounds and the reaction products, steam or heated gas, such as the heated air and nitrogen, are utilized. The unreacted compounds and the reaction products removed from the adsorbent is preferably recycled to the process of the decomposition by reduction for complete decomposition before they are discharged to the atmosphere. The fluid treated with the adsorption maybe either a gas or a liquid.

Hydrocarbons contained in the fluid is decomposed to carbon dioxide and water with the thermal decomposition. The fluid is preferably heated after hydrogen halides contained in the fluid are removed. For removal of the hydrogen halides, a method, such as absorption with an alkaline aqueous solution or water, removal by contact with an adsorbent having sodium hydroxide, potassium hydroxide, calcium hydroxide, sodium carbonate or the like on it and the like other methods, can be utilized.

The treatment of removal of hydrogen halides and the thermal decomposition are generally carried out in the gas phase. When the fluid treated with the decomposition by reduction is a gas, the fluid can be introduced to the process of removal of hydrogen halides and then to the process of thermal decomposition directly. When the fluid is a liquid, it is preferred that the fluid is treated with aeration with the air or the like. The gas generated by the aeration is then introduced to the process of removal of hydrogen halides and to the process of thermal decomposition.

As the method of thermal decomposition, the decomposition by simply heating the fluid, the decomposition by catalytic heat oxidation comprising heat treatment in the presence of a catalyst and other like methods can be utilized. In the method of decomposition by catalytic heat oxidation, the same kinds of metal catalysts as those utilized for decomposition by reduction can be utilized. The air can be mixed with the gas to be treated when necessary. The temperature of the thermal decomposition is generally in the range from about 400 to 500°C in the methods described above.

When the fluid treated with the decomposition by reduction is treated by the biological decomposition, hydrocarbons formed by the decomposition by reduction of the volatile organic halogenated compounds are biologically decomposed easily. For the treatment of the biological decomposition, microorganisms having the ability of decomposing hydrocarbons, such as activated sludge, can be utilized. It is preferred in the method of the biological decomposition that the fluid treated with the decomposition by reduction is a gas. The biological decomposition is generally conducted by bringing the gaseous fluid into contact with the microorganisms having the ability of decomposing hydrocarbons. When the fluid treated with the decomposition by reduction is a gas, the fluid can be introduced to the process of the biological decomposition directly. When the fluid is a liquid, it is preferred that the fluid is treated with aeration by using the air or the like. The gas from the aeration is then introduced to the process of the biological decomposition.

As the method of bringing the fluid into contact with the material containing the microorganism, the method of passing the fluid through a column packed with the packings to which the microorganisms are fixed, the method of treating the fluid with suspended activated sludge and the like methods can be adopted. When the method with the packed column is adopted, the velocity of the gas passed through the column is 200 to 5000 hr⁻¹ as the space velocity. As the material of the packings, activated charcoal, plastics like polystrene foam, peat, zeolite and the like can be utilized. Water is sprayed on the packings from time to time. When the method of suspended activated sludge is adopted, the gas for the treatment can be introduced into the conventional activated sludge treatment plant.

The adsorption treatment, the thermal decomposition and the treatment of biological decomposition described above may be utilized singly or as a combination of two or more treatments.

When the volatile organic halogenated compounds in the fluid for treatment are flons, hydrogen fluoride is generated during the decomposition treatment by reduction. For preventing degradation of the catalytic activity by the hydrogen fluoride thus formed, a catalyst of a noble metal supported on a carrier resistant against hydrogen fluoride is preferably utilized. Examples of such carrier resistant against hydrogen fluoride are organic carriers, such as resins like polyesters, fluororesins, fibers and the like other organic carriers, and inorganic carriers, such as zeolite, silica, silica alumina, titania, zirconia and the like other inorganic carriers. Examples of the noble metals supported on the carrier are elementary metals, such as platinum, palladium, iridium, rhodium, gold, osmium, silver and rhenium, and multi-component metals comprising two or more kinds of these metals.

To summarize the advantages obtained by the invention, the method of the invention decomposes efficiently the volatile organic halogenated compounds contained in a fluid (water or gas) by catalytic reduction with a small amount of energy to make the compounds harmless. The method is operated with low cost and practically highly advantageous.

### Reference Example 1

To about 2 liter of nitrogen gas containing about 5.5 volume ppm of trichloroethylene gas, 0.5 g of a palladium catalyst containing 0.5 weight % of palladium supported on alumina and 2.24 ml of hydrogen gas were added and mixed well by stirring at 25°C. Samples were taken out from time to time with a specified time interval and analyzed by a gas chromatography.

For comparison, a mixture without addition of hydrogen gas with addition of the catalyst alone, a mixture without addition of the catalyst with addition of hydrogen gas alone and a mixture without addition of both of hydrogen gas and the catalyst were treated by the same method. The results are shown in Table 1.

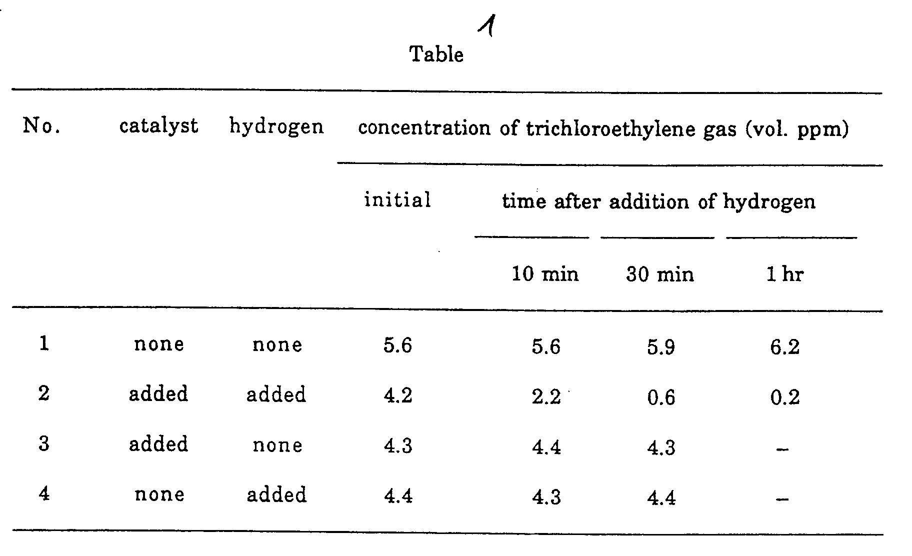

### Reference-Example 2

A gas containing 295 volume ppb of trichloroethylene in nitrogen gas was passed through a column packed with 50 g of a platinum catalyst containing 0.5 weight % of platinum supported on γ-alumina at the speed of 10 N-l/min (SV: 12,000 hr⁻¹). Hydrogen gas was added to the sample gas at the inlet of the catalyst column at the speed of 10 N-ml/min. The temperature of the experiment was 25°C. Trichloroethylene in the gas at the outlet of the catalyst column was measured by a gas chromatography. The results are shown in Table 2.

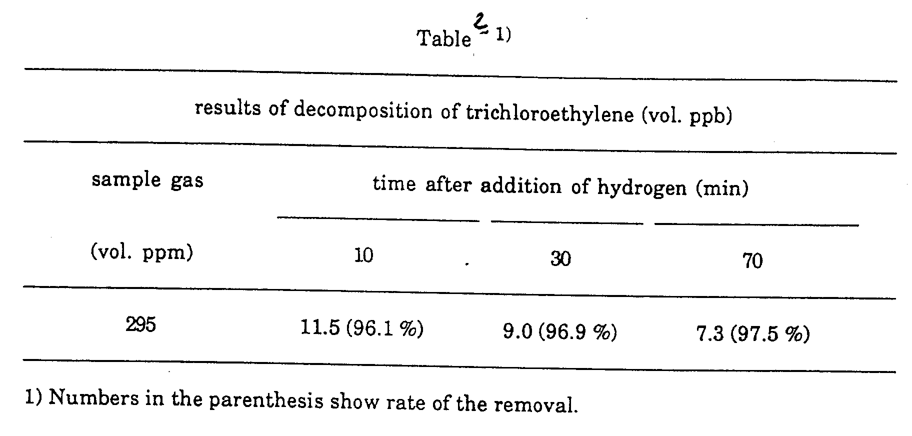

### Reference Example 3

A gas containing 680 volume ppb of trichloroethylene in the air was passed through a column of 25 mm in inner diameter and 100 mm in length packed with 50 g of a platinum catalyst containing 0.5 weight % of platinum supported on γ-alumina at the speed of 10 N-l/min (SV: 12,000 hr⁻¹). Hydrogen gas was added to the sample gas at the inlet of the catalyst column at the speed of 0.1 N-l/min. The temperature of the experiment was 25°C. Trichloroethylene in the treated gas was analyzed by a gas chromatography. The results are shown in Table 3.

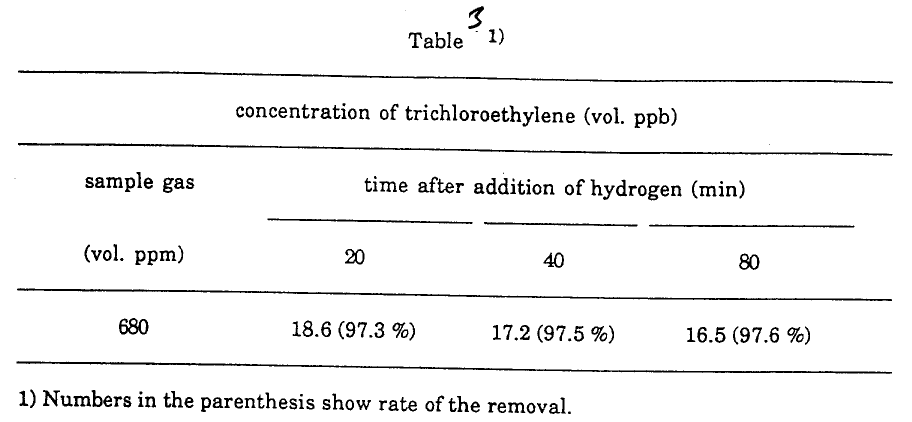

### Reference-Example 4

### Removal of humidity with a cation exchange resin

An air containing 0.5 volume ppm trichloroethylene and having 90 % relative humidity at 25°C was passed through a column of 30 mm in inner diameter and 700 mm in length packed with 500 ml of a sodium type strong cation exchange resin SK1B® at the speed of SV 5,000 hr⁻¹. The concentration of trichloroethylene at the outlet remained about the same as that at the inlet of the column, showing that trichloroethylene was not adsorbed by the resin. The relative humidity of the gas was reduced to 1 % or less at the outlet.

The dehumidified gas obtained above was used for the decomposition treatment by reduction by passing it through a catalyst column having 30 mm in inner diameter and 70 mm in length packed with about 50 g of a catalyst containing 0.5 weight % of platinum supported on γ-alumina at the speed of SV 12,000 hr⁻¹ together with hydrogen gas supplied from a hydrogen generator. Trichloroethylene was not detected in the treated gas at the outlet of the column. The treatment was continued for 30 hours. The operation was stopped after 30 hours and the ion exchange resin was heated to 150°C for 1 hour to remove water by vaporization. When the operation was resumed by the same condition, the operation could be continued for further 30 hours without any problem.

### Reference Example 5

An underground water containing 50 ppm of trichloroethylene was introduced to the air-stripping tower of 1.7 m in diameter and 7.5 m in height and sprayed from the top of the tower at the speed of 9 m³/br while the air was blown at the speed of 300 Nm³/hour to bring them into the counter current contact with each other. After the treatments made twice in series, the concentration of trichloroethylene in the treated water at the outlet of the air-stripping tower was 20 ppb and the concentration of trichloroethylene in the discharged air was about 100 volume ppm.

The discharged air was led to a rotor type adsorption apparatus using about 2.6 kg of activated carbon fiber as an adsorbent for adsorption of trichloroethylene. The concentration of trichloroethylene in the treated gas was about 2 volume ppm.

The treated gas was introduced to the catalyst column packed with 60 kg of a platinum catalyst containing 0.5 weight % of platinum supported on γ-aluminum and hydrogen gas was mixed to the gas at the inlet of the catalyst column at the speed of 3 Nm³/h. Trichloroethylene was not detected in the treated gas at the outlet of the catalyst column.

When steam was introduced to the column containing the activated carbon fiber, a condensed water containing 170 ppm of trichloroethylene was discharged from the column.

The condensed water was recycled to the feed water tank.

### Reference Example 6

The apparatus shown in Figure 1 was used in this example.

An underground water containing 0.1 ppm of trichloroethylene was introduced to the air-stripping tower of 1.7 m in diameter and 7.5 m in height packed with Net Ring TS-1® to the height of 3 m and sprayed from the top of the tower at the speed of 90 m³/he while the air was blown from the bottom of the tower at the speed of 3000 Nm³/hr to bring them into the counter current contact with each other. The concentration of trichloroethylene in the water at the outlet of the air-stripping tower was 2 ppb and the concentration of trichloroethylene in the exhausted air was 0.5 volume ppm.

The exhausted air was introduced to the adsorption tower 4 packed with a granular activated charcoal Shirasagi SX 4-6 mesh® (a product of Takeda Chemical Industries Co., Ltd.) to the height of 0.3 m and the diameter of 1.7 m for adsorption of trichloroethylene. The concentration of trichloroethylene in the air after the adsorption treatment remained at 0.05 volume ppm or less until the time of the operation reached 120 hours. The operation of the activated charcoal adsorption tower was stopped after 120 hours and the air inside was purged with 7 Nm³ of nitrogen gas.

For regeneration of the activated charcoal, nitrogen gas heated to 150°C was passed through the tower at the speed of 300 Nm³/hr for desorption of trichloroethylene from the activated charcoal. To the gas discharged from the desorption process, 60 g (672 liter) of hydrogen gas was added and the mixed gas was introduced to the catalytic decomposition tower 1 packed with 60 kg of the palladium-γ-alumina catalyst.

Nitrogen gas mixed with hydrogen gas was circulated in a closed cycle from the activated charcoal adsorption tower 4 to the catalytic decomposition tower 1 for 15 minutes using a compressor. Trichloroethylene was not detected in the nitrogen gas after 15 minutes.

### Reference-Example 7

A gas containing 10 volume ppm of difluorochloromethane (Flon 22) was continuously treated with 50 ml of a platinum/γ-alumina catalyst containing 0.5 weight % of platinum at the GHSV of 1000 hr⁻¹ by adding 1000 volume ppm of hydrogen gas. The operation was carried out under atmospheric pressure condition and the temperature was 30°C.

The treated gas was analyzed by a gas chromatography and the removal by decomposition of Flon 22 was obtained from the ratio of the concentrations of Flon 22 at the inlet and at the outlet of the test column.

The initial rate of removal by decomposition of Flon 22 was 90 % or more and the value gradually decreased to 80 % after 20 days of the operation.

### Reference Example 8

The gas containing Flon 22 was treated and analyzed by the same method as in Reference Example 7 except that a platinum-ZSM5® (zeolite) catalyst containing 0.5 weight % of platinum was used. The removal of Flon 22 remained at the same value as the initial value of 90 % or more after the operation of 30 days.

### Reference Example 9

A gas containing difluorodichloromethane (Flon 12) was treated and analyzed by the same method as in Reference Example 8. The removal of Flon 12 was 90 % or more.

### Reference Example 10

A gas containing fluorotrichloromethane (Flon 11) was treated and analyzed by the same method as in Reference Example 8. The removal of Flon 11 was 90 % or more.

### Reference Example 11

To the gas extracted from a soil (atmosphere of the air) containing about 10 volume ppm of trichloroethylene, hydrogen gas was added to make the concentration of hydrogen in the mixed gas about 2 % (v/v). The mixed gas was introduced to a catalyst column of 80 mm in inner diameter and 200 mm in height packed with about 1 liter of a palladium/γ-alumina catalyst containing 0.5 weight % of palladium at the speed of SV 6,000 hr⁻¹ and treated with a single stage process. The removal of trichloroethylene was about 70 to 80 %.

The same gas was treated in the multi-stage process containing four stages by using the apparatus shown in Figure 2. Hydrogen gas was added in each stages in an amount to make the concentration of hydrogen gas about 0.5 % (v/v). In the columns of each stages, about 250 ml of the same catalyst were packed. The gas was treated at the speed of SV 24,000 in each of the four stages. This condition makes the total amount of the catalyst and hydrogen gas employed the same as the treatment described above. Trichloroethylene was not detected in the gas treated with this method unlike the gas treated by the method described above.

### Reference Example 12

The air containing 100 volume ppm of trichloroethylene was treated with the decomposition by reduction at the room temperature, the atmospheric pressure and the speed of the gas flow of SV 1000 hr⁻¹ in the hydrogen stream of 200 ml/min in the presence of 50 g of a platinum/γ-alumina catalyst containing 0.5 weight % of platinum (3 mm pellets). The rate of removal of trichloroethylene was 75 %. In the treated gas, 25 volume ppm of the residual undecomposed trichloroethylene and small amounts of ethane and other reaction intermediates were detected.

The same treated gas used in the above treatment was passed through a column packed with 200 g of granular activated charcoal Shirasagi SX200® ( a product of Takeda Chemical Industries Co., Ltd.) at the speed of 100 hr⁻¹ SV, the room temperature and the atmospheric pressure. Ethane contained in the gas was partially removed at the early stage of the reaction but passed the column without decomposition after a short period of the operation. Other unreacted compounds and reaction intermediates were not detected in the treated gas.

The treatment of decomposition by reduction and the treatment of adsorption were continued for 5 hours. Then, the adsorption column was replaced with a new adsorption column and the treatment of decomposition by reduction and the treatment of adsorption were resumed. Nitrogen heated at 80°C was passed through the adsorption column which had been used in the adsorption treatment at the speed of SV 1000 hr⁻¹ to desorb adsorbed substances from the activated charcoal column. The discharged gas by the regeneration obtained here was mixed with the air containing 100 volume ppm of trichloroethylene and then recycled to the process of decomposition by reduction. The treatment with the activated charcoal was repeated twice and no change was found in the composition of the treated gas.

### Reference Example 13

An underground water containing 0.1 mg/l of trichloroethylene was introduced to an air-stripping tower of 1.7 m in diameter and 7.5 m in height and sprayed from the top of the tower at the speed of 9 m³/hr while the air was blown from the bottom of the tower at the speed of 300 Nm³/hr to bring them into the counter current contact with each other. The concentration of trichloroethylene in the water at the bottom of the tower was about 2 µg/l and the concentration of trichloroethylene in the discharged gas at the top of the tower was 0.5 volume ppm.

Hydrogen was added to the discharged gas obtained above at the speed of 3.0 Nm³/hr and the mixed gas was introduced to a catalyst tower of 1.2 m in inner diameter and 0.8 m in height packed with 750 kg of a platinum/γ-alumina catalyst containing 0.5 weight % of platinum (1/8 inch pellets). Trichloroethylene was not detected in the gas discharged from the catalyst tower.

The gas discharged from the catalyst tower was passed through the apparatus for removing hydrochloric acid. The apparatus has a column for absorption of hydrochloric acid gas containing 300 liter of 5 weight % aqueous solution of sodium hydroxide. The discharged gas was passed through the apparatus for thermal decomposition using about 500 liter of a platinum catalyst at the speed of 600 hr⁻¹ SV and the temperature of 400 to 450°C. In the gas discharged from this apparatus, none of trichloroethylene and hydrochloric acid was detected and no hydrocarbon, such as ethane and methane, was detected either. Thus, the discharged gas could be disposed in the atmosphere without any further treatment.

### Reference Example 14

An apparatus of biological decomposition for the following processes was constructed: feed water was introduced to an air-stripping tower; the air was blown into the feed water in the stripping tower from a blower; the aeration gas from this process was taken out from the top of the stripping tower; the aeration gas thus obtained was mixed with hydrogen gas; the mixed gas was introduced into a column packed with a reducing catalyst to reduce volatile organic halogenated compounds; and the mixed gas was introduced to a column packed with packings on which microorganisms were supported for biological decomposition of the hydrocarbons formed by the reduction.

Feed water containing 100 µg/l of trichloroethylene was introduced to an air-stripping tower of 1.7 m in diameter and 7.5 m in height packed with Net Ring TS-1® at the speed of 90 m³/hr and then treated by aeration by passing the air at the speed of 3000 m³/hr based on the standard condition. Trichloroethylene in the treated water was 2 µg/l or less and the concentration of trichloroethylene in the gas at the outlet of the air-stripping tower was 0.5 volume ppm.

To the gas discharged from the air-stripping tower, hydrogen was added at the speed of 30 Nm³/hr and the mixed gas was introduced to a catalytic decomposition tower of 1.2 m in diameter and 1.5 m in height packed with 1500 kg of pellets of 3 mm in diameter and 3 mm length of the platinum-alumina catalyst containing 0.5 weight % of platinum. Trichloroethylene was not detected in the gas discharged from the outlet of the catalyst tower. The gas discharged from the outlet of the catalyst tower was introduced without further treatments to a biological decomposition tower of 1000 mm in diameter and 7200 mm in height packed with 3600 mm in height of peat column to which microorganisms had been loaded by spraying sewage water at the speed of 3,000 hr⁻¹ SV.

Hydrocarbons, such as ethylene, methane and the like, were not detected in the gas discharged from the biological decomposition tower.

As Comparative Example, an operation was run by the same method as that described above except that the catalyst tower was eliminated and hydrogen gas was not added and the ability to remove trichloroethylene was evaluated. The results are shown in Table 10. The analysis was made by using a gas chromatography.

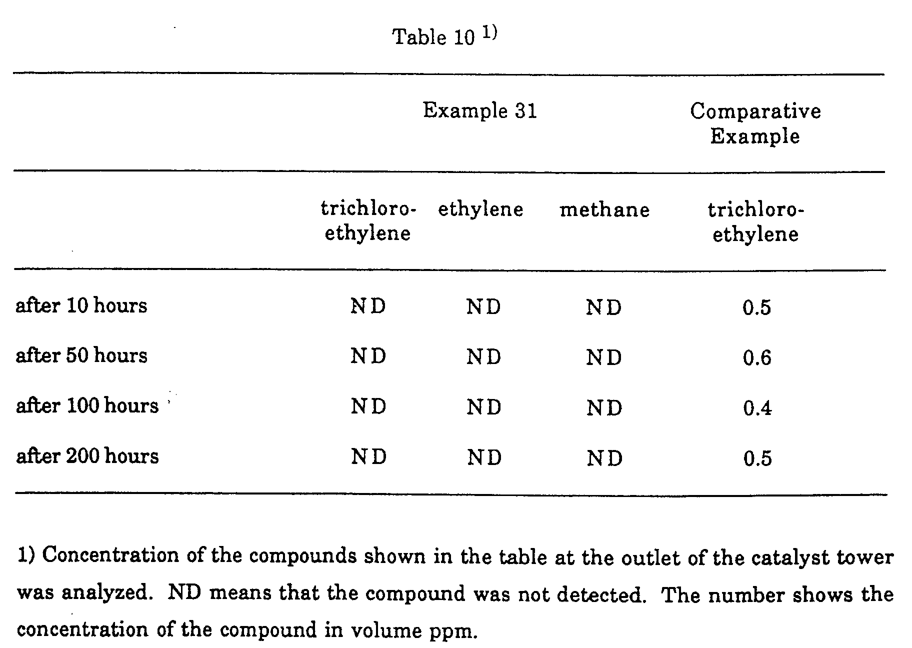

## Claims

1. A process for decomposing volatile organic halogenated compounds which comprises
- bringing a gas, containing
- volatile organic halogenated compounds into contact with an adsorbent,
- to separate the volatile organic halogenated compounds therefrom
- regenerating the adsorbent with nitrogen gas
- to obtain a regeneration gas, containing
- volatile organic halogenated compounds, and
- water
- decreasing the relative humidity of the regeneration gas containing
- the volatile organic halogenated compounds, and
- water, and
- then bringing the regeneration gas in contact with a reducing agent
- in the presence of a
- palladium catalyst, or a
- platinum catalyst.

2. A process as claimed in claim 1, wherein the volatile organic halogenated compounds are obtained from service water, underground water or soil.

3. A process as claimed in claim 1 or 2, wherein the relative humidity of the regeneration gas containing the volatile organic halogenated compounds is decreased by one or more treatments selected from the group consisting of heating the regeneration gas, mixing the regeneration gas with dry air, and dehumidifying the regeneration gas with an ion exchange resin.

4. A process as claimed in ay of claims 1 to 3, wherein the catalyst comprises palladium metal or platinum metal, respectively, deposited on a carrier, and the amount of palladium or platinum is 0.1 to 10 weight % based on the carrier.

5. A process as claimed in ay of claim 1 to 4, wherein the amount of the reducing agent is 100 to 100,000 volume parts per 1 volume part of the volatile organic halogenated compounds.

6. A process as claimed in ay of claims 1 to 5, wherein the palladium catalyst or the platinum catalyst is positioned in a column as layers of a multiple stage and the regeneration gas containing the volatile organic halogenated compounds and water is passed through the stages of the catalyst successively while the reducing agent is added to the regeneration gas before each stage.

7. A process as claimed in any of claims 1 to 6, which comprises subjecting the regeneration gas which contained the volatile organic halogenated compounds and water, after contact with the reducing agent in the presence of the palladium catalyst or the platinum catalyst to at least one further treatment selected from the group consisting of an adsorption treatment, a thermal decomposition treatment and a biological decomposition treatment.

8. A process as claimed in ay of claims 1 to 7, wherein the palladium or the platinum of the catalyst is supported on a carrier treated with a hydrophobic compound.

9. A process for decomposing volatile organic halogenated compounds which comprises
- bringing a gas, containing
- volatile organic halogenated compounds into contact with an adsorbent,
- to separate the volatile organic halogenated compounds therefrom
- regenerating the adsorbent with steam
- condensing the resulting steam
- to obtain a condensed water, containing
- volatile organic halogenated compounds,
- aerating the condensed water with air
- to obtain a regeneration gas, containing
- volatile organic halogenated compounds, and
- water
- decreasing the relative humidity of the regeneration gas, and
- then bringing the regeneration gas in contact with a reducing agent
- in the presence of a
- palladium catalyst, or a
- platinum catalyst

10. A process as claimed in claim 9, wherein the volatile organic halogenated compounds are obtained from service water, underground water or soil.

11. A process as claimed in claim 9 or 10, wherein the relative humidity of the regeneration gas containing the volatile organic halogenated compounds is decreased by one or more treatments selected from the group consisting of heating the regeneration gas,
mixing the regeneration gas with dry air, and
dehumidifying the regeneration gas with an ion exchange resin.

12. A process as claimed in any of claims 9 to 11, wherein the catalyst comprises palladium metal or platinum metal, respectively, deposited on a carrier, and the amount of palladium or platinum is 0.1 to 10 weight % based on the carrier.

13. A process as claimed in any of claims 9 to 12, wherein the amount of the reducing agent is 100 to 100,000 volume parts per 1 volume part of the volatile organic halogenated compounds.

14. A process as claimed in any of claims 9 to 13, wherein the palladium catalyst or the platinum catalyst is positioned in a column as layers of a multiple stage and the regeneration gas containing the volatile organic halogenated compounds and water is passed through the stages of the catalyst successively while the reducing agent is added to the regeneration gas before each stage.

15. A process as claimed in any of claims 9 to 15, which comprises subjecting the regeneration gas which contained the volatile organic halogenated compounds and water, after contact with the reducing agent in the presence of the palladium catalyst or the platinum catalyst to at least one further treatment selected from the group consisting of an adsorption treatment, a thermal decomposition treatment and a biological decomposition treatment.

16. A process as claimed in any of claims 9 to 15, wherein the palladium or the platinum of the catalyst is supported on a carrier treated with a hydrophobic compound.

## Patentansprüche

1. Verfahren zur Zersetzung flüchtiger organischer halogenierter Verbindungen, das umfaßt:
- Inkontaktbringen eines Gases, das flüchtige organische halogenierte Verbindungen enthält, mit einem Adsorptionsmittel,
- um die flüchtigen organischen halogenierten Verbindungen davon abzutrennen,
- Regenerieren des Adsorptionsmittels mit Stickstoffgas,
- um ein Regenerierungsgas zu erhalten, das flüchtige organische halogenierte Verbindungen und Wasser enthält,
- Herabsetzung der relativen Feuchtigkeit des Regenerierungsgases, das die flüchtigen organischen halogenierten Verbindungen und Wasser enthält, und
- Inkontaktbringen des Regenerierungsgases mit einem Reduktionsmittel,
- in Gegenwart eines Palladiumkatalysators oder eines Platinkatalysators.

2. Verfahren nach Anspruch 1, worin die flüchtigen organischen halogenierten Verbindungen aus Brauchwasser, Grundwasser oder Böden erhalten werden.

3. Verfahren nach Anspruch 1 oder 2, worin die relative Feuchte des Regenerierungsgases, das die flüchtigen organischen halogenierten Verbindungen enthält, durch eine oder mehrere Behandlungen herabgesetzt wird, die ausgewählt werden aus der Gruppe, die aus Erwärmen des Regenerierungsgases, Mischen des Regenerierungsgases mit trockener Luft und Entfeuchten des Regenerierungsgases mit einem Ionenaustauscherharz besteht.

4. Verfahren nach irgend einem der Ansprüche 1 bis 3, worin der Katalysator ein Palladiummetall bzw. ein Platinmetall, aufgetragen auf einen Träger, umfaßt, und die Menge des Palladiums oder des Platins von 0,1 bis 10 Gew.-%, bezogen auf den Träger, beträgt.

5. Verfahren nach irgend einem der Ansprüche 1 bis 4, worin die Menge des Reduktionsmittels 100 bis 100000 Volumenteile pro Volumenteil der flüchtigen organischen halogenierten Verbindungen beträgt.

6. Verfahren nach irgend einem der Ansprüche 1 bis 5, worin der Palladiumkatalysator oder der Platinkatalysator in einer Kolonne in mehreren Stufen als Schichten angeordnet ist, und das Regenerierungsgas, das die flüchtigen organischen halogenierten Verbindungen und Wasser enthält, nacheinander über die Katalysatorstufen geführt wird, während das Reduktionsmittel vor jeder Stufe dem Regenerationsgas zugeführt wird.

7. Verfahren nach irgend einem der Ansprüche 1 bis 6, das umfaßt: Unterwerfen des Regenerierungsgases, das die flüchtigen organischen halogenierten Verbindungen und Wasser enthielt, nach dem Kontakt mit dem Reduktionsmittel in Gegenwart des Palladiumkatalysators oder des Platinkatalysators mindestens einer weiteren Behandlung, die aus der Gruppe ausgewählt wird, die aus einer Adsorptionsbehandlung, einer thermischen Zersetzungsbehandlung und einer biologischen Zersetzungsbehandlung besteht.

8. Verfahren nach irgend einem der Ansprüche 1 bis 7, worin das Palladium oder das Platin des Katalysators auf einem Träger aufgezogen ist, der mit einer hydrophoben Verbindung behandelt wurde.

9. Verfahren zur Zersetzung flüchtiger organischer halogenierter Verbindungen, das umfaßt:
- Inkontaktbringen eines Gases, das flüchtige organische halogenierte Verbindungen enthält, mit einem Adsorptionsmittel,
- um die flüchtigen organischen halogenierten Verbindungen davon abzutrennen,
- Regenerieren des Adsorptionsmittels mit Dampf,
- Kondensieren des resultierenden Dampfes, um kondensiertes Wasser zu erhalten, das die flüchtigen organischen halogenierten Verbindungen enthält,
- Belüften des kondensierten Wassers mit Luft, um ein Regenerierungsgas zu erhalten, das flüchtige organische halogenierte Verbindungen und Wasser enthält,
- Herabsetzen der relativen Feuchte des Regenerierungsgases und
- anschließendes Inkontaktbringen des Regenerierungsgases mit einem Reduktionsmittel, in Gegenwart eines Palladiumkatalysators oder eine Platinkatalysators.

10. Verfahren nach Anspruch 9, worin die flüchtigen organischen halogenierten Verbindungen aus Brauchwasser, Grundwasser oder Böden erhalten wurden.

11. Verfahren nach Anspruch 9 oder 10, worin die relative Feuchte des Regenerierungsgases, das die flüchtigen organischen halogenierten Verbindungen enthält, durch eine oder mehrere Behandlungen herabgesetzt wird, die ausgewählt werden aus der Gruppe, die aus Erwärmen des Regenerierungsgases, Mischen des Regenerierungsgases mit trockener Luft und Entfeuchten des Regenerierungsgases mit einem Ionenaustauscherharz besteht.

12. Verfahren nach irgend einem der Ansprüche 9 bis 11, worin der Katalysator ein Palladiummetall bzw. ein Platinmetall, aufgetragen auf einen Träger, umfaßt, und die Menge des Palladiums oder des Platins von 0,1 bis 10 Gew.-%, bezogen auf den Träger, beträgt.

13. Verfahren nach irgend einem der Ansprüche 9 bis 12, worin die Menge des Reduktionsmittels 100 bis 100000 Volumenteile pro Volumenteil der flüchtigen organischen halogenierten Verbindungen beträgt.

14. Verfahren nach irgend einem der Ansprüche 9 bis 13, worin der Palladiumkatalysator oder der Platinkatalysator in einer Kolonne in mehreren Stufen als Schichten angeordnet ist, und das Regenerierungsgas, das die flüchtigen organischen halogenierten Verbindungen und Wasser enthält, nacheinander über die Katalysatorstufen geführt wird, während das Reduktionsmittel vor jeder Stufe dem Regenerationsgas zugeführt wird.

15. Verfahren nach irgend einem der Ansprüche 9 bis 14, das umfaßt: Unterwerfen des Regenerierungsgases, das die flüchtigen organischen halogenierten Verbindungen und Wasser enthielt, nach dem Kontakt mit dem Reduktionsmittel in Gegenwart des Palladiumkatalysators oder des Platinkatalysators mindestens einer weiteren Behandlung, die aus der Gruppe ausgewählt wird, die aus einer Adsorptionsbehandlung, einer thermischen Zersetzungsbehandlung und einer biologischen Zersetzungsbehandlung besteht.

16. Verfahren nach irgend einem der Ansprüche 9 bis 15, worin das Palladium oder das Platin des Katalysators auf einem Träger aufgezogen ist, der mit einer hydrophoben Verbindung behandelt wurde.

## Revendications

1. Procédé pour décomposer les composés organiques halogénés volatiles qui consiste:
- à amener un gaz, contenant des composés organiques halogénés volatiles, en contact avec un adsorbant,
- à séparer les composés organiques halogénés volatiles de celui-ci,
- à régénérer l'adsorbant avec de l'azote gazeux,
- à obtenir un gaz de régénération, contenant les composés organiques halogénés volatiles, et de l'eau,
- à diminuer l'humidité relative du gaz de régénération contenant les composés organiques halogénés volatiles et de l'eau et
- à amener ensuite le gaz de régénération en contact avec un agent réducteur en présence d'un catalyseur au palladium ou d'un catalyseur au platine.

2. Procédé selon la revendication 1, dans lequel composés organiques halogénés volatiles sont obtenus à partir de l'eau de ville, de l'eau souterraine ou du sol.

3. Procédé selon la revendication 1 ou 2, dans lequel l'humidité relative du gaz de régénération contenant les composés organiques halogénés volatiles est diminuée au moyen d'un ou plusieurs traitements choisis dans le groupe formé par le chauffage du gaz de régénération, le mélange du gaz de régénération avec de l'air sec, et la déshumidification du gaz de régénération avec une résine échangeuse d'ions.

4. Procédé selon l'une quelconque des revendications 1 à 3, dans lequel le catalyseur comprend du palladium métallique ou du platine métallique, déposés respectivement sur un support, et la quantité de palladium ou de platine est de 0,1 à 10% en poids par rapport au support.

5. Procédé selon l'une quelconque des revendications 1 à 4, dans lequel la quantité de l'agent réducteur est de 100 à 100 000 parties en volume pour 1 partie en volume des composés organiques halogénés volatiles.

6. Procédé selon l'une quelconque des revendications 1 à 5, dans lequel le catalyseur au palladium ou le catalyseur au platine est disposé dans une colonne sous forme de couches d'un étage multiple et le gaz de régénération contenant les composés organiques halogénés volatiles et de l'eau traversent successivement les étages du catalyseur tandis que l'agent réducteur est ajouté au gaz de régénération avant chaque étage.

7. Procédé selon l'une quelconque des revendications 1 à 6, qui consiste à soumettre le gaz de régénération qui contenait les composés organiques halogénés volatiles et de l'eau, après contact avec l'agent réducteur en présence du catalyseur au palladium ou du catalyseur au platine, à au moins un traitement complémentaire choisi dans le groupe formé par un traitement par adsorption, un traitement par décomposition thermique et un traitement par décomposition biologique.

8. Procédé selon l'une quelconque des revendications 1 à 7, dans lequel le palladium ou le platine du catalyseur est supporté sur un support traité avec un composé hydrophobe.

9. Procédé pour décomposer les composés organiques halogénés volatiles qui consiste:
- à amener un gaz, contenant les composés organiques halogénés volatiles, en contact avec un adsorbant,
- à séparer les composés organiques halogénés volatiles de celui-ci,
- à régénérer l'adsorbant avec de la vapeur d'eau,
- à condenser la vapeur d'eau résultante,
- à obtenir une eau condensée, contenant les composés organiques halogénés volatiles,
- à aérer l'eau condensée avec de l'air
- à obtenir un gaz de régénération, contenant les composés organiques halogénés volatiles et de l'eau,
- à diminuer l'humidité relative du gaz de régénération, et
- à amener ensuite le gaz de régénération en contact avec un agent réducteur en présence d'un catalyseur au palladium ou un catalyseur au platine.

10. Procédé selon la revendication 9, dans lequel composés organiques halogénés volatiles sont obtenus à partir de l'eau de ville, de l'eau souterraine ou du sol.

11. Procédé selon la revendication 9 ou 10, dans lequel l'humidité relative du gaz de régénération contenant les composés organiques halogénés volatiles est diminuée au moyen d'un ou plusieurs traitements choisis dans le groupe formé par le chauffage du gaz de régénération, le mélange du gaz de régénération avec de l'air sec, et la déshumidification du gaz de régénération avec une résine échangeuse d'ions.

12. Procédé selon l'une quelconque des revendications 9 à 11, dans lequel le catalyseur constitue du palladium métallique ou du platine métallique, respectivement, déposés sur un support, et la quantité de palladium ou de platine est de 0,1 à 10% en poids par rapport au support.

13. Procédé selon l'une quelconque des revendications 9 à 12, dans lequel la quantité de l'agent réducteur est de 100 à 100 000 parties en volume pour 1 partie en volume des composés organiques halogénés volatiles.

14. Procédé selon l'une quelconque des revendications 9 à 13, dans lequel le catalyseur au palladium ou le catalyseur au platine est disposé dans une colonne sous forme de couches d'un étage multiple et le gaz de régénération contenant les composés organiques halogénés volatiles et l'eau traversent successivement les étages du catalyseur tandis que l'agent réducteur est ajouté au gaz de régénération avant chaque étage.

15. Procédé selon l'une quelconque des revendications 9 à 15, qui consiste à soumettre le gaz de régénération qui contenait les composés organiques halogénés volatiles et de l'eau, après contact avec l'agent réducteur en présence du catalyseur au palladium ou du catalyseur au platine, à au moins un traitement complémentaire choisi dans le groupe formé par un traitement par adsorption, un traitement par décomposition thermique et un traitement par décomposition biologique.

16. Procédé selon l'une quelconque des revendications 9 à 15, dans lequel le palladium ou le platine du catalyseur est supporté sur un support traité avec un composé hydrophobe.
